**Europäisches Patentamt**

**European Patent Office**

**Office européen des brevets**

(19)

(11) Veröffentlichungsnummer : **0 344 359 B1**

(12) **EUROPÄISCHE PATENTSCHRIFT**

(45) Veröffentlichungstag der Patentschrift :
20.03.91 Patentblatt 91/12

(51) Int. Cl.⁵ : **A21C 1/02**

(21) Anmeldenummer : **88117290.2**

(22) Anmeldetag : **18.10.88**

(54) Vorrichtung zur Behandlung von Back- und Konditormassen.

(30) Priorität : 31.05.88 DE 8807071 U

(43) Veröffentlichungstag der Anmeldung :
06.12.89 Patentblatt 89/49

(45) Bekanntmachung des Hinweises auf die
Patenterteilung :
20.03.91 Patentblatt 91/12

(84) Benannte Vertragsstaaten :
BE DE FR GB IT NL

(56) Entgegenhaltungen :
DE-B- 1 201 784
DE-C- 435 730
GB-A- 592 999
US-A- 1 695 345

(56) Entgegenhaltungen :
US-A- 2 300 542
US-A- 2 324 179
US-A- 2 339 081
US-A- 2 345 266
US-A- 3 262 680
US-A- 4 500 210

(73) Patentinhaber : **Paass, Gerhard**
**Bergerstrasse 26**
**W-5650 Solingen (DE)**

(72) Erfinder : **Paass, Gerhard**
**Bergerstrasse 26**
**W-5650 Solingen (DE)**

(74) Vertreter : **Paul, Dieter-Alfred, Dipl.-Ing.**
**Fichtestrasse 18**
**W-4040 Neuss 1 (DE)**

## Beschreibung

Die Erfindung betrifft eine Vorrichtung zur Behandlung von Back- und Konditormassen mit folgenden Merkmalen :

a) die Vorrichtung weist einen Ständer auf ;

b) außen vor der Vorderseite des Ständers ist ein Kesselhalter für die Aufnahme eines Kessels für die Back- und Konditormassen vorgesehen ;

c) oberhalb des Kesselhalters ist ein Behandlungswerkzeug angeordnet, das durch Hochfahren des mit dem Kessel bestückten Kesselhalters in den Kessel einfahrbar ist ;

d) der Ständer umgibt einen Hohlraum ;

e) im Ständer ist eine sich vertikal erstreckende Querwandung angeordnet ;

f) in dem Hohlraum ist auf der dem Kesselhalter zugewandten Seite der Querwandung eine Vertikalführung mit einem Schlitten angeordnet ;

g) der Schlitten ist über ein Getriebe mit einem Elektromotor zum vertikalen Verfahren des Schlittens gekoppelt ;

h) an dem Schlitten ist eine Halteeinrichtung angebracht ;

i) die Halteeinrichtung weist aus dem Ständer nach außen herausragende Haltearme auf ;

j) an den Haltearmen ist der Kesselhalter angebracht.

Eine derartige Vorrichtung ist in der US-A-4 500 210 beschrieben. Sie weist einen Gerätefuß und einen darauf aufgestellten, säulenartigen Ständer sowie einen Gerätekopf auf. Der Gerätefuß dient der Standsicherheit der gesamten Vorrichtung. Der auf das obere Ende des Ständers aufgesetzte Gerätekopf steht an der Vorderseite vor. Aus ihm ragt nach unten ein Behandlungswerkzeug heraus, das von einem in dem Gerätekopf angeordneten Elektromotor angetrieben wird. Durch ein besonderes Getriebe kann das Werkzeug verschiedene Bewegungen ausführen.

Der Ständer weist einen H-förmigen Träger auf, der so angeordnet ist, daß eine den Hohlraum des Ständers in einen vorderen und einen hinteren Bereich aufteilende Querwandung entsteht und daß dessen Schenkel die Seitenwandungen des Ständers bilden. Vorder- und Hinterseite sind durch eine Vorder- bzw. Hinterwandung geschlossen. Zusätzlich ist der Ständer von einer Blechummantelung umgeben.

Im vorderen Teil des Ständers ist eine Vertikalführung mit einem Schlitten angeordnet. Die Höhenverstellung des Schlittens geschieht über eine sich ebenfalls vertikal erstreckende Spindel, welche über ein Kegelgetriebe und eine seitlich nach außen herausgeführte Kurbel antreibbar ist. Statt der konkret dargestellten Kurbel kann auch ein Elektromotor vorgesehen sein.

An dem Schlitten ist eine Halteeinrichtung in Form von Haltearmen angebracht, die über einer an der Vorderseite vorgesehene großflächize Öffnung aus dem Ständer nach außen ragen. An den Haltearmen ist ein ringförmiger Kesselhalter befestigt, auf dem ein Kessel befestigt werden kann, in dem sich Back- oder Konditormassen befinden.

Für den Betrieb wird zunächst der Kesselhalter in seine unterste Stellung gebracht. Dies geschieht durch eine Drehbewegung der Spindel. Dann wird der Kessel mit der zu bearbeitenden Back- oder Konditormasse auf den Kesselhalter aufgesetzt und dort festgeklemmt. Anschließend wird der Kesselhalter mit dem Kessel hochgefahren, bis sich der Kessel in seiner Arbeitsstellung befindet und das Behandlungswerkzeug tief in die Back- und Konditormasse eintaucht. Es kann dann der Elektromotor für die Bewegung des Behandlungswerkzeuges angeschaltet werden.

Diese Vorrichtung hat den gravierenden Nachteil, daß über die Öffnungen in der Vorderseite des Ständers aus dem Kessel herausspritzende Back- oder Konditormassen in das Innere des Ständers gelangen und zu erheblichen Verschmutzungen und sogar Funktionsstörungen führen. Die dann notwendige Reinigung ist wegen des im wesentlichen geschlossenen Vorderteils des Ständers schwierig und zeitaufwendig. Statt der Handkurbel kann ein Elektromotor für den Antrieb der Spindel angeordnet werden.

In dem DE-U-86 10 726.7 ist ebenfalls eine Vorrichtung zur Behandlung von Back- und Konditormassen beschrieben. Sie hat grundsätzlich den gleichen Aufbau, nämlich einen Gerätefuß, einen darauf aufgestellten, säulenartigen Ständer und einen Gerätekopf mit einem aus dem Gerätekopf nach unten herausragenden Behandlungwerkzeug, das durch einen Elektromotor angetrieben wird.

Über den inneren Aufbau des Ständers ist dem DE-U-86 10 726.7 nichts zu entnehmen. Bei der praktischen Ausführung dieser Vorrichtung ist der Innenraum hohl ausgebildet. In diesem Hohlraum sind zwei vertikale Führungsstangen angeordnet, auf denen ein diese umgreifender Schlitten vertikal verfahrbar ist. Hierfür ist eine Spindel vorgesehen, die von ihrem oberen Ende über einen Elektromotor angetrieben ist.

An dem Schlitten ist eine Halteeinrichtung in Form von Haltearmen befestigt, die aus den rückwandseitigen Schlitzen nach außen ragen und dort an den Seitenwandungen des Ständers vorbei nach vorne geführt sind. An den Haltearmen ist ein Kesselhalter befestigt, an dem der Kessel festgeklemmt werden kann.

Bei dieser Ausführungsform ist zwar der Innenraum des Ständers gegen herausspritzende Back- oder Konditormassen geschützt. Dies muß jedoch damit erkauft werden, daß die Halteeinrichtung für den Kesselhalter und auch die Vertikalführung außerordentlich stabil und schwer ausgebildet sein muß, da der wirksame Hebelarm durch die Herausführung an der Hinterseite des Ständers sehr groß ist. Zum Heben des hohen Gewichts ist ein kräftiger Elektromotor erforderlich. Außerdem müssen stabile Wandungen für den Ständer vorgesehen sein, da die Rückseite wegen der dort vorhandenen Schlitze keine tragende Funktion übernehmen kann. Insgesamt ergibt sich hierdurch eine außerordentlich schwere und teure Konstruktion.

Der Erfindung liegt die Aufgabe zugrunde, eine Vorrichtung der eingangs genannten Art so auszubilden, daß einerseits der Innenraum des Ständers gegen verspritzende Back- oder Konditormassen geschützt und zudem sinnvoll genutzt und andererseits eine außerordentlich stabile und leichte Konstruktion erhalten wird.

Diese Aufgabe wird erfindungsgemäß durch die Verwirklichung folgender Merkmale gelöst :

k) der Elektromotor ist auf der dem Kesselhalter abgewandten Seite der Querwandung angeordnet ;

l) die Haltearme ragen seitlich aus dem Ständer heraus ;

m) der Ständer hat zumindest an seiner Vorderseite eine abnehmbare, jedoch geschlossene Abdeckhaube.

Erfindungsgemäß wird an dem Konzept der Aufteilung des Innenraums des Ständers durch eine Querwandung festgehalten, der hintere Raum aber dadurch genutzt, daß dort der Elektromotor für den Antrieb des Schlittens angeordnet wird. Die Haltearme für den Kesselhalter werden erfindungsgemäß an den Seitenwandungen herausgeführt, was den Innenraum des Ständers vor hereinspritzender Back- oder Konditormasse schützt. Die Querwandung ist ein wesentliches tragendes Element der Ständerkonstruktion. Es eröffnet sogar die Möglichkeit, an der Vorderseite und gegebenenfalls auch an der Rückseite großflächige und abnehmbare Abdeckhauben vorzusehen, die für Wartungs- und Reparaturzwecke leicht und entfernt und einen problemlosen Zugang zum Inneren des Ständers zulassen.

In Ausbildung der Erfindung ist vorgesehen, daß die Querwandung sich über die gesamte Breite des Ständers erstreckt und vorzugsweise die Seitenwandungen des Ständers an der Querwandung befestigt sind und mit dieser ein Doppel-T-Profil bilden. Die Befestigung geschieht zweckmäßigerweise durch Verschweißen, so daß sich ein sehr stabiles Ständerprofil ergibt, das zudem einfach herzustellen ist. Es eröffnet die Möglichkeit, Vor- und Rückseite praktisch vollständig als Abdeckhauben auszubilden, so daß beide Seiten der Querwandung freigelegt werden können. Herstellung, Wartung und Reparatur gestalten sich hierdurch besonders einfach.

In weiterer Ausgestaltung der Erfindung ist vorgesehen, daß die Seitenwandungen des Ständers den Bewegungsbereich der Haltearme eng begrenzende Schlitze aufweisen, wobei an den Haltearmen Abdeckscheiben angebracht sind, deren vertikale Erstreckung so bemessen ist, daß sie die Schlitze über den gesamten Hubbereich der Haltearme abdecken. Diese Ausbildung stellt eine zusätzliche Sicherung gegen das Eindringen von Schmutz und verspritzten Massen dar.

Vorteilhafterweise ist die Vertikalführung an der Querwandung gehalten. Sie weist zweckmäßigerweise zumindest zwei Führungssäulen auf, die der Schlitten umfaßt und in einer zur Querwandung parallelen Ebene angeordnet sind. An ihren oberen und unteren Enden können die Führungssäulen über Halteblöcke an der Querwandung befestigt sein.

In weiterer Ausbildung der Erfindung ist vorgeschlagen, daß die Vertikalführung Endschalter zum Abschalten des Elektromotors bei Erreichen der Schlittenendstellungen aufweist. Diese Endschalter können an den Halteblöcken zur Betätigung durch den Schlitten angebracht sein.

Das Getriebe für den Antrieb der Vertikalführung besteht vorteilhafterweise aus einer mit dem Schlitten verbundenen, vertikalen Zahnstange und einem auf der Antriebswelle des Elekromotors sitzenden Ritzel. Die Zahnstange ist zwecks raumsparenden Aufbaus an der Rückseite des Schlittens unmittelbar benachbart der Querwandung angebracht.

Der Elektromotor selbst sollte an der Querwandung angeflanscht sein. Eine raumsparende Ausbildung ergibt sich insbesondere dann, wenn der Elektromotor als Getriebemotor mit einem Winkelgetriebe ausgebildet ist.

Schließlich ist gemäß der Erfindung vorgesehen, daß der Kesselhalter aus seiner oberen Endstellung um zumindest die vorgesehene Eintauchtiefe des Behandlungswerkzeuges absenkbar ist. Die erfindungsgemäße Vorrichtung weist also einen gegenüber den bekannten Vorrichtungen wesentlich vergrößerten Hubbereich für den Kesselhalter auf, der es ermöglicht, den Kessel in der unteren Endstellung auf den Kesselhalter aufzusetzen, ohne daß hierfür das Behandlungswerkzeug entfernt werden muß. Dies verkürzt die Rüstzeiten vor und nach der Behandlung der Back- oder Konditormassen erheblich.

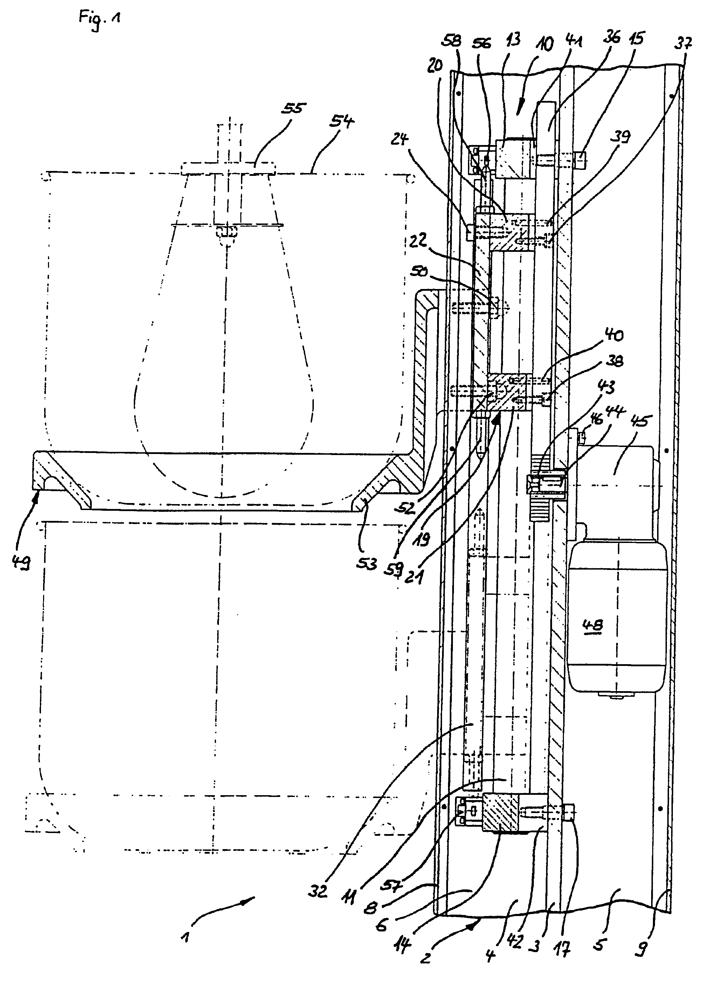

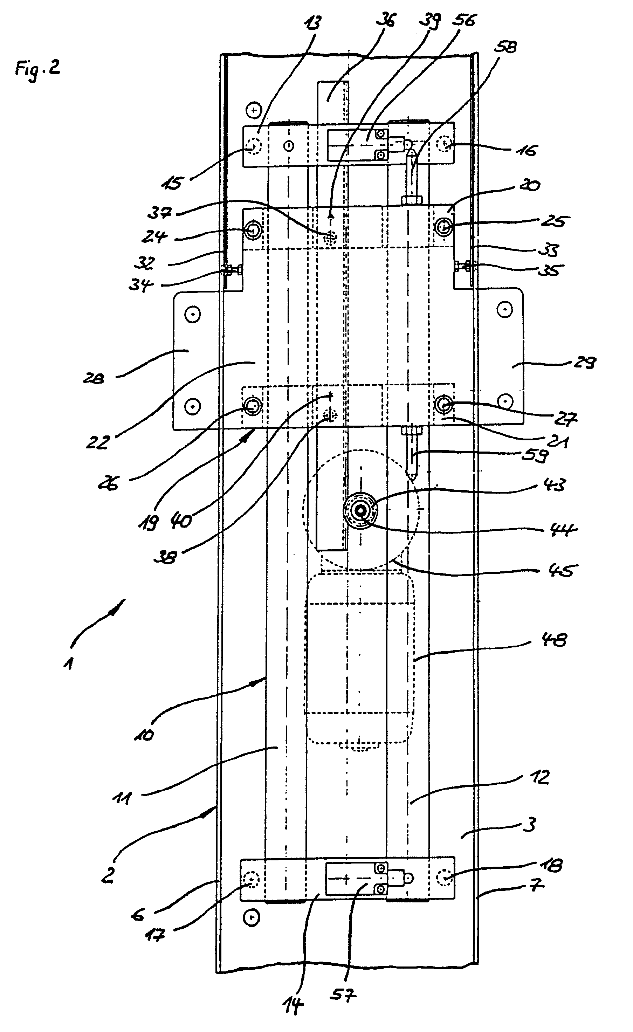

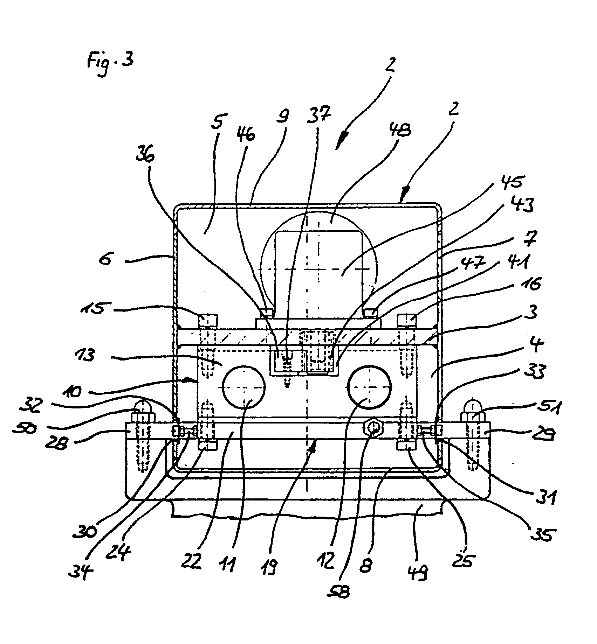

In der Zeichnung ist die Erfindung an Hand eines Ausführungsbeispiels näher veranschaulicht. Es zeigen :

Figur (1) einen Vertikalschnitt durch einen Teil des Ständers der Vorrichtung, und zwar parallel zu den Seitenwandungen ;

Figur (2) eine Vorderansicht des Ständers gemäß Figur (1) mit abgenommener Abdeckhaube ;

Figur (3) einen Horizontalschnitt durch den Ständer gemäß den Figuren (1) und (2).

Die in den Figuren teilweise dargestellte Vorrichtung (1) weist einen Ständer (2) auf, dessen größter Abschnitt in den Figuren (1) und (2) zu sehen ist. Untenseitig steht er auf einem hier nicht näher dargestellten Fuß, während sich obenseitig ein Gerätekopfteil anschließt, in dem der Antrieb für ein Behandlungswerkzeug angeordnet ist. Das Gerätekopfteil ist wegen der übersichtlichkeit hier gleichfalls weggelassen.

Der Ständer (2) weist innenseitig, und zwar in seiner Mitte verlaufend, eine Querwandung (3) auf, die im wesentlichen das tragende Element des Ständers (2) bildet. Sie verläuft vertikal über die gesamte Höhe des Ständers (2) und trennt dessen Innenraum in einen vorderen Bereich (4) und in einen hinteren Bereich (5) auf.

An den vertikalen Stirnseiten der Querwandung (3) sind aus Blech bestehende, ebene Seitenwandungen (6, 7) angeschweißt. Sie bilden mit der Querwandung (3) ein H-förmiges Profil. An der Vorder- und an der Rückseite des Ständers (2) sind Abdeckhauben (8, 9) angeschraubt, die die jeweiligen freien Kanten der Seitenwände (6, 7) verbinden und die vorderen bzw. hinteren Bereiche des Ständerinnenraums abschließen. Sie können für Reparaturoder Wartungszwecke leicht entfernt werden und erstrecken sich im wesentlichen über die Höhe des Ständers (2).

Auf der vorderseitigen Fläche der Querwandung (3) ist eine Vertikalführung (10) angebracht. Sie weist zwei im Querschnitt kreisförmige Führungsstangen (11, 12) auf, die parallel und im Abstand zueinander in vertikaler Richtung verlaufen, und zwar in einer zur Querwandung (3) parallelen Ebene. An ihren oberen und unteren Enden sind sie jeweils in einem Halteblock (13, 14) befestigt, welche jeweils über zwei Schrauben (15, 16) bzw. (17, 18) an der Querwandung (3) angeschraubt sind.

Auf den Führungsstangen (11, 12) ist ein Schlitten (19), vertikal verschiebbar geführt. Er besteht aus einem oben- und untenseitigen Schlittenblock (20, 21) und einer beide verbindenden Schlittenplatte (22). Die Schlittenblöcke (20, 21) laufen auf den Führungsstangen (11, 12) und sind an ihrer Vorderseite über Schrauben (24, 25) bzw. (26, 27) mit der Schlittenplatte (22) verbunden.

Die Schlittenplatte (22) weist seitliche Haltearme (28, 29) auf, die über Schlitze (30, 31) im vorderen Bereich der Seitenwandungen (6), (7) seitlich aus dem Ständer (2) herausragen. Die Schlitze (30, 31) erstrecken sich über den gesamten Hubbereich des Schlittens (19). Zu deren Abdeckung gegen Eindringen von Schmutz oder dergleichen sind Abdeckstreifen (32, 33) vorgesehen, die innenseitig an der Schlittenplatte (22) über Distanzschrauben (34, 35) befestigt sind, sich also mit dem Schlitten (19) mitbewegen. Auf diese Weise sind die Schlitze (30, 31) auch außerhalb des Bereichs der Haltearme (28, 29) geschlossen.

An der Rückseite der Schlittenblöcke (20, 21) ist eine sich vertikal erstreckende Zahnstange (36) mittels zweier Schrauben (37, 38) und unter Verwendung von Zentrierstiften (39, 40) angeschraubt. Zur Vermeidung von Kollisionen mit den Halteblöcken (13), (14) weisen diese entsprechende Ausnehmungen (41, 42) auf. In die Zahnstange (36) greift ein Ritzel (43) ein, das auf einer Ausgangswelle (44) sitzt und mit dieser die Querwandung (3) nach hinten durchfaßt. Die Ausgangswelle (44) ist Teil eines Winkelgetriebes (45), das über Schrauben (46, 47) an der Rückseite der Querwandung (3) angeflanscht ist. An der Unterseite des Winkelgetriebes sitzt ein Elektromotor (48), mit dem das Winkelgetriebe (45) eine Einheit bildet.

An den Haltearmen (28, 29) der Schlittenplatte (22) ist ein Kesselhalter (49) mittels insgesamt vier Schraube (50, 51, 52) befestigt. Der Kesselhalter (49) weist einen Ringteil (53) auf, der der Aufnahme eines in Figur (1) nur gestrichelt dargestellten Kessels (54) dient. Ein solcher Kessel (54) wird mittels üblicher Klemmeinrichtungen, die hier nicht näher dargestellt sind, befestigt.

In Figur (1) ist ferner noch ein Behandlungswerkzeug (55) dargestellt, und zwar schematisch und gestrichelt. Es ist – was hier nicht näher gezeigt ist – mit dem Gerätekopfteil verbunden und wird von dort her angetrieben. Es kann Schwenk- und Drehbewegungen ausführen. In vertikaler Richtung ist es jedoch nicht beweglich.

Zum Einsetzen des Kessels (54) in den Ringteil (53) des Kesselhalters (49) wird dieser nach unten in die in Figur (1) gestrichelt dargestellte Lage durch Ansteuern des Elektromotors (48) verfahren. Der Hubbereich des Schlittens (19) und damit des Kesselhalters (49) ist dabei so bemessen, daß der Kessel (54) ohne Demontage des Behandlungswerkzeuges (55) am Kesselhalter (49) befestigt werden kann. Anschließend wird der Kesselhalter (49) hochgefahren, so daß das Behandlungswerkzeug (55) in den Kessel (54) eintaucht.

Die jeweiligen Endstellungen des Kesselhalters (49) sind durch Endschalter (56, 57) vorgegeben, die auf den Halteblöcken (13), (14) sitzen und die bei ihrer Betätigung die Stromversorgung zu dem Elektromotor (48) unterbrechen. Die Endschalter (56, 57) liegen im Bewegungsbereich von Tastern (58, 59), von denen jeweils einer an der Unter- und an der Oberseite der Schlittenplatte (22) justierbar angeschraubt ist.

## Ansprüche

1. Vorrichtung zur Behandlung von Back- und Konditormassen mit folgenden Merkmalen :

    a) die Vorrichtung weist einen Ständer (2) auf ;

    b) außen vor der Vorderseite des Ständers (2) ist ein Kesselhalter (49) für die Aufnahme eines Kessels (54) für die Back- und Konditormassen vorgesehen ;

    c) oberhalb des Kesselhalters (49) ist ein Behandlungswerkzeug (55) angeordnet, das durch Hochfahren des mit dem Kessel (54) bestückten Kesselhalters (49) in den Kessel (54) einfahrbar ist ;

d) der Ständer (2) umgibt einen Hohlraum ;

e) im Ständer (2) ist eine sich vertikal erstreckende Querwandung (3) angeordnet ;

f) in dem Hohlraum ist auf der dem Kesselhalter (49) zugewandten Seite der Querwandung (3) eine Vertikalführung (10) mit einem Schlitten (19) angeordnet ;

g) der Schlitten (19) ist über ein Getriebe (36, 43) mit einem Elektromotor (48) zum vertikalen Verfahren des Schlittens (19) gekoppelt ;

h) an dem Schlitten (19) ist eine Halteeinrichtung (28, 29) angebracht ;

i) die Halteeinrichtung weist aus dem Ständer (2) nach außen herausragende Haltearme (28, 29) auf ;

j) an den Haltearmen (28, 29) ist der Kesselhalter (49) angebracht ; gekennzeichnet durch folgende Merkmale :

k) der Elektromotor (48) ist auf der dem Kesselhalter (49) abgewandten Seite der Querwandung (3) angeordnet ;

l) die Haltearme (28, 29) ragen seitlich aus dem Ständer (2) heraus ;

m) der Ständer (2) hat zumindest an seiner Vorderseite eine abnehmbare, jedoch geschlossene Abdeckhaube (9).

2. Vorrichtung nach Anspruch 1, dadurch gekennzeichnet, daß die Querwandung (3) sich über die gesamte Breite des Ständers (2) erstreckt.

3. Vorrichtung nach Anspruch 2, dadurch gekennzeichnet, daß die Seitenwandungen (6, 7) des Ständers (2) an der Querwandung (3) befestigt sind und mit dieser ein Doppel-T-Profil bilden.

4. Vorrichtung nach einem der Ansprüche 1 bis 3, dadurch gekennzeichnet, daß auch die Rückseite des Ständers (2) eine abnehmbare, geschlossene Abdeckhaube (9) aufweist.

5. Vorrichtung nach einem der Ansprüche 1 bis 4, dadurch gekennzeichnet, daß die Seitenwandungen (6, 7) des Ständers (2) den Bewegungsbereich der Haltearme (28, 29) eng begrenzende Schlitze (30, 31) aufweisen, wobei an den Haltearmen (28, 29) Abdeckscheiben (32, 33) angebracht sind, deren vertikale Erstreckung so bemessen ist, daß sie die Schlitze (30, 31) über den gesamten Hubbereich der Haltearme (28, 29) abdecken.

6. Vorrichtung nach einem der Ansprüche 1 bis 5, dadurch gekennzeichnet, daß die Vertikalführung (10) an der Querwandung (3) gehalten ist.

7. Vorrichtung nach einem der Ansprüche 1 bis 6, dadurch gekennzeichnet, daß die Vertikalführung (10) zumindest zwei Führungssäulen (11, 12) aufweist, die der Schlitten (19) umfaßt und in einer zur Querwandung (3) parallelen Ebene angeordnet sind.

8. Vorrichtung nach Anspruch 6 oder 7, dadurch gekennzeichnet, daß die Führungssäulen (11, 12) an ihren oberen und unteren Enden über Halteblöcke (13, 14) an der Querwandung (3) befestigt sind.

9. Vorrichtung nach einem der Ansprüche 1 bis 8, dadurch gekennzeichnet, daß die Vertikalführung (10) Endschalter (56, 57) zum Abschalten des Elektromotors (48) bei Erreichen der Schlittenendstellungen aufweist.

10. Vorrichtung nach Anspruch 8 und 9, dadurch gekennzeichnet, daß die Endschalter (56, 57) an den Halteblöcken (13, 14) zur Betätigung durch den Schlitten (19) angebracht sind.

11. Vorrichtung nach einem der Ansprüche 1 bis 10, dadurch gekennzeichnet, daß das Getriebe aus einer mit dem Schlitten (19) verbundenen, vertikalen Zahnstange (36) und einem auf der Antriebswelle (44) des Elekromotors (48) sitzenden Ritzel (43) besteht.

12. Vorrichtung nach Anspruch 11, dadurch gekennzeichnet, daß die Zahnstange (36) an der Rückseite des Schlittens (19) unmittelbar benachbart der Querwandung (3) angebracht ist.

13. Vorrichtung nach einem der Ansprüche 1 bis 12, dadurch gekennzeichnet, daß der Elektromotor (48) an der Querwandung (3) angeflanscht ist.

14. Vorrichtung nach einem der Ansprüche 1 bis 13, dadurch gekennzeichnet, daß der Elektromotor (48) als Getriebemotor mit einem Winkelgetriebe (45) ausgebildet ist.

15. Vorrichtung nach einem der Ansprüche 1 bis 14, dadurch gekennzeichnet, daß der Kesselhalter (49) aus seiner oberen Endstellung um zumindest die vorgesehene Eintauchtiefe des Behandlungswerkzeuges (55) absenkbar ist.

**Claims**

1. Device for treating baking and confectionery mixtures, having the following features :

a) the device has a post (2) ;

b) a basin holder (49) for receiving a basin (54) for the baking and confectionery mixtures is provided outside the post (2), in front of its front side ;

c) a treatment tool (55), which can be introduced into the basin (54) by raising the basin holder (49) equipped with the basin (54), is arranged above the basin holder (49) ;

d) the post (2) encloses a hollow space ;

e) a vertically extending transverse wall (3) is arranged in the post (2) ;

f) a vertical guide (10) with a slide (19) is arranged in the hollow space on that side of the transverse wall (3) facing the basin holder (49) ;

g) the slide (19) is coupled, via a gearing (36, 43), to an electromotor (48) for the vertical displacement of the slide (19) ;

h) a holding device (28, 29) is attached to the slide (19) :

i) the holding device has holding arms (28, 29) projecting outwards from the post (2) ;

j) the basin holder (49) is attached to the holding arms (28, 29) ;

characterized by the following features :

k) the electromotor (48) is arranged on that side of the transverse wall (3) facing away from the basin holder (49) ;

l) the holding arms (28, 29) project laterally from the post (2) ;

m) the post (2) has, at least on its front side, a removable but closed cover hood (9).

2. Device according to Claim 1, characterized in that the transverse wall (3) extends over the entire width of the post (2).

3. Device according to Claim 2, characterized in that the side walls (6, 7) of the post (2) are fastened to the transverse wall (3) and form with the latter a double-T profile.

4. Device according to one of Claims 1 to 3, characterized in that the rear side of the post (2) also has a removable, closed cover hood (9).

5. Device according to one of Claims 1 to 4, characterized in that the side walls (6, 7) of the post (2) have slots (30, 31) restricting the range of movement of the holding arms (28, 29), cover plates (32, 33), whose vertical extension is dimensioned such that they cover the slots (30, 31) over the entire range of travel of the holding arms (28, 29), being attached to the holding arms (28, 29).

6. Device according to one of Claims 1 to 5, characterized in that the vertical guide (10) is held against the transverse wall (3).

7. Device according to one of Claims 1 to 6, characterized in that the vertical guide (10) has at least two guide columns (11, 12) which are enclosed by the slide (19) and are arranged in a plane parallel to the transverse wall (3).

8. Device according to Claim 6 or 7, characterized in that the guide columns (11, 12) are fastened to the transverse wall (3), at their upper and lower ends, via holding blocks (13, 14).

9. Device according to one of Claims 1 to 8, characterized in that the vertical guide (10) has end switches (56, 57) for switching off the electromotor (48) when the end positions of the slide are reached.

10. Device according to Claims 8 and 9, characterized in that the end switches (56, 57) are attached to the holding blocks (13, 14) in order to be activated by the slide (19).

11. Device according to one of Claims 1 to 10, characterized in that the gearing consists of a vertical rack (36), connected to the slide (19), and a pinion (43) seated on the drive shaft (44) of the electromotor (48).

12. Device according to Claim 11, characterized in that the rack (36) is attached to the rear side of the slide (19), directly adjacent to the transverse wall (3).

13. Device according to one of Claims 1 to 12, characterized in that the electromotor (48) is flangemounted on the transverse wall (3).

14. Device according to one of Claims 1 to 13, characterized in that the electromotor (48) is designed as a geared motor with an angular gear (45).

15. Device according to one of Claims 1 to 14, characterized in that the basin holder (49) can be lowered from its upper end position at least by the depth of immersion provided for the treatment tool (55).

## Revendications

1. Dispositif pour le traitement de pâtes de boulangerie et de pâtisserie comportant les particularités suivantes :

a) Le dispositif comporte un montant (2) ;

b) Un porte-cuve (49) destiné à recevoir une cuve (54) pour les pâtes de boulangerie et de pâtisserie est prévu extérieurement devant le côté avant du montant (2) ;

c) au-dessus du porte-cuve (49) est disposé un outil de traitement (55) qui peut être introduit dans la cuve (54) en faisant monter le porte-cuve (49) garni de la cuve (54) ;

d) le montant (2) entoure un espace creux ;

e) une paroi transversale (3) qui s'étend verticalement est disposée dans le montant (2) ;

f) un guidage vertical (10) muni d'un chariot (19) est disposé dans l'espace creux du côté de la paroi transversale (3) qui est tourné vers le porte-cuve (49) ;

g) le chariot (19) est accouplé par l'intermédiaire d'une transmission (36, 43) à un moteur électrique (48) destiné à déplacer verticalement le chariot (19) ;

h) un dispositif porteur (28, 29) est monté sur le chariot (19) ;

i) le dispositif porteur comporte des bras porteurs (28, 29) qui font saillie vers l'extérieur hors du montant (2) ;

j) le porte-cuve (49) est monté sur les bras porteurs (28, 29) ;

caractérisé par les particularités suivantes :

k) le moteur électrique (48) est disposé du côté de la paroi transversale (3) qui est opposé au porte-cuve (49) ;

l) les bras porteurs (28, 29) font saillie latéralement hors du montant (2) ;

m) le montant (2) comporte, du moins sur son côté avant, un capot (9) amovible, mais fermé.

2. Dispositif selon la revendication 1, caractérisé par le fait que la paroi transversale (3) s'étend sur toute la largeur du montant (2).

3. Dispositif selon la revendication 2, caractérisé par le fait que les parois latérales (6, 7) du montant (2) sont fixées sur la paroi transversale (3) et qu'elles forment avec celle-ci un profilé en double T.

4. Dispositif selon l'une des revendications 1 à 3, caractérisé par le fait que le côté arrière du montant (2) comporte également un capot (9) fermé et amovible.

5. Dispositif selon l'une des revendications 1 à 4, caractérisé par le fait que les parois latérales (6, 7) du montant (2) présentent des fentes (30, 31) qui délimitent étroitement la zone de déplacement des bras porteurs (28, 29), cependant que sont posées sur les bras porteurs (28, 29) des plaques de recouvrement (32, 33) dont l'étendue verticale est dimensionnée de telle manière qu'elles recouvrent les fentes (30, 31) sur toute la zone de déplacement des bras porteurs (28, 29).

6. Dispositif selon l'une des revendications 1 à 5, caractérisé par le fait que le guidage vertical (10) est maintenu sur la paroi transversale (3).

7. Dispositif selon l'une des revendications 1 à 6, caractérisé par le fait que le guidage vertical (10) comporte au moins deux colonnes de guidage (11, 12) que le chariot (19) entoure et qui sont disposées dans un plan parallèle à la paroi transversale (3).

8. Dispositif selon la revendication 6 ou 7, caractérisé par le fait que les colonnes de guidage (11, 12) sont fixées sur la paroi transversale (3) à leurs extrémités inférieures et supérieures par l'intermédiaire de blocs de retenue (13, 14).

9. Dispositif selon l'une des revendications 1 à 8, caractérisé par le fait que le guidage vertical (10) comporte des commutateurs de fin de course (56, 57) pour couper le moteur électrique (48) lorsque les positions finales du chariot sont atteintes.

10. Dispositif selon la revendication 8 ou 9, caractérisé par le fait que les commutateurs de fin de course (56, 57) sont montés sur les blocs de retenue (13, 14) en vue de leur actionnement par le chariot (19).

11. Dispositif selon l'une des revendications 1 à 10, caractérisé par la fait que la transmission se compose d'une crémaillère verticale (36) reliée au chariot (19) et d'un pignon (13) monté sur l'arbre d'entraînement (44) du moteur électrique (48).

12. Dispositif selon la revendication 11, caractérisé par le fait que la crémaillère (35) est montée sur le côté arrière du chariot (19) au voisinage immédiat de la paroi transversale (3).

13. Dispositif selon l'une des revendications 1 à 12, caractérisé par le fait que le moteur électrique (48) est monté par des brides sur la paroi transversale (3).

14. Dispositif selon l'une des revendications 1 à 13, caractérisé par le fait que le moteur électrique (48) est réalisé sous la forme d'un moto-réducteur à engrenage conique (45).

15. Dispositif selon l'une des revendications 1 à 14, caractérisé par le fait que le porte-cuve (49) peut être abaissé à partir de sa position finale supérieure d'au moins la profondeur de pénétration qui est prévue pour l'outil de traitement (55).

Fig. 1

Fig. 2

Fig. 3